# EUROPEAN PATENT SPECIFICATION

(11) **EP 1 517 734 B1**
(45) Date of publication and mention of the grant of the patent: **06.12.2006**
(21) Application number: 03739175.2
(22) Date of filing: 18.06.2003
(51) Int. Cl.: B01D 35/153, B01D 35/16

(54) **ARRANGEMENT FOR CONTAINING FILTER CONTAMINANT; ASSEMBLY; AND, METHODS**
ANORDNUNG ZUR AUFNAHME VON FILTER VERUNREINIGUNG, FILTEREINRICHTUNG UND VERFAHREN
DISPOSITIF DE RETENTION DE CONTAMINANT DE FILTRATION, ENSEMBLE ET PROCEDES CORRESPONDANTS

(30) Priority: 21.06.2002 US 390856 P
(43) Date of publication of application: 30.03.2005
(73) Proprietor: DONALDSON COMPANY, INC., Minneapolis, MN 55440-1299 (US)
(72) Inventor: FOBE, Johan, B-3012 Leuven (BE); GRECO, Enrico, I-Villa Poma (IT); DILS, Julien, B-3350 Linter (BE)
(74) Representative: Eisenführ, Speiser & Partner
(86) International application number: PCT/US2003/019112
(87) International publication number: WO 2004/000436

(56) References cited:
- WO-A-00/04973
- US-B1- 6 322 697

## Description

This application is being filed as a PCT International Patent Application in the name of Donaldson Company, Inc., a U.S. national corporation and resident, (Applicant for all countries except US); Johan Fobe, a Belgian resident and citizen (Applicant for US designation only); Enrico Greco, an Italian resident and citizen (Applicant for US designation only); and Julien Dils, a Belgian resident and citizen (Applicant for US designation only); on 18 June 2003, designating all countries and claiming priority to U.S. Serial Number 60/390,856 filed 21 June 2002.

### Technical Field

The present disclosure concerns filter assemblies. A typical application concerns liquid filter assemblies. The invention concerns an arrangement for containing sediment from filtration, within a filter cartridge, during use and service.

### Background

In general, fluid filters, such as air or liquid filters, operate by providing a filter media in a fluid flow. During operation, contaminant or sediment material filtered from the fluid is collected on/in the media. In many instances, a filter cartridge is used, which, periodically, is removed from the filter assembly and is replaced.

In some systems, the filter cartridges operate with an out-to-in flow. By this, it is meant that the fluid to be filtered is directed toward an outer periphery of filter media, and passes through the media to an inside (clean fluid) volume, during filtration. When this configuration is used, contaminant or sediment is loaded at an outer surface of the media.

During periodic servicing, the cartridge, including the media, is removed from a remainder of the filter assembly and is replaced. When the media is used with an out-to-in flow, the contaminant or sediment can fall off, or drop off, the outer surface of the media or cartridge, during a servicing operation.

A variety of arrangements have been previously developed, relating to retaining contaminant during servicing, to inhibit the contaminant or sediment from dropping off, or sloughing off, the filter cartridge, during servicing. Examples of such arrangements are described for example in U.S. 6,322,697; WO 01/05485; U.S. Provisional 60/280,787; and, PCT application PCT/US 02/10298 (Int'1 filing date 02/04/2002).

In general, improvements in arrangements for containing filtration contaminant during servicing of a filtration cartridge have been desired.

### Summary of the Invention

According to the present disclosure, a filter cartridge is provided. In typical preferred configurations, the filter cartridge includes an extension of filter media defining an internal volume. In a typical application, the extension of filter media will define a cylindrical configuration, typically as a pleated configuration.

The filter cartridge further includes a liner/valve (or support/valve) construction positioned to extend along an upstream side of the media. When the media is configured for out-to-in flow, the liner/valve construction will typically be positioned as an outer liner/valve construction circumscribing the media.

In typical, preferred, applications, the liner/valve construction will have a cylindrical configuration and will include two components: a support defining an interior and having a first (i.e., at least one) aperture (or opening) therethrough, typically a plurality of apertures; and, a flexible valve sheet operably positioned within the interior of the support between the support and the extension of filter media, with an upstream or outer surface of the valve sheet directed toward the support. The flexible valve sheet includes a first (i.e., at least one) deformable valve member, and typically a plurality of deformable valve members. Each aperture in the support preferably has a deformable valve member in the flexible valve sheet associated with it. Each valve member is typically deformable to a first open orientation caused by a first opening fluid flow or pressure against the upstream surface of the flexible valve sheet (typically an outer surface) to allow contaminant flow through the liner/valve construction and to the filter media. Each valve member also has a second, closed, orientation to inhibit loss of contaminant from the filter cartridge when fluid flow or pressure against the outer or upstream surface of the flexible valve sheet is below the first opening pressure.

In a typical application of the techniques described herein, the first opening pressure is the ordinary flow pressure for the fluid to be filtered. Also, typically, during the closed orientation there is no differential pressure because the system will have been shut off for servicing.

The typical filter cartridge further includes first and second opposite end caps, with the filter media and support/valve construction extending therebetween. The support/valve construction can be removably mounted on the cartridge, or it can be permanently mounted therein.

A typical support for the support/valve construction includes at least one, and often at least 10 apertures therein, generally about 50 to 1000 apertures. In many instances, each of the apertures will be at least about 1 mm up to about 20 mm in radius (for example 3 to 15 mm) if round; or about the same area (about 3 sq. mm. - 1260 sq. mm., for example 28-710 sq. mm.) if not round; and, a typical flexible valve sheet includes enough valves to have at least one valve member, typically and preferably a cut valve, associated with each aperture in the support. Preferably the flexible valve sheet is formed by cuts such as die cuts through a sheet of appropriate material, with the flexible valve sheet then being curved or curled (by hand or by an automated procedure) and inserted into the outer support. The typical, preferred, support includes an indexing rib therein, so that when the valve sheet is placed therein, the rib can index the positions of the cut valves relative to the apertures in the support.

A variety of shapes of cut valves are provided. One useful shape is a U-shape. Several types of U-shaped configurations are shown, including: a boxed U-shape; and, a curved U-shape. Alternate cut valves include, for example, cut valves formed from opposed cuts; and, cut valves formed from single straight cuts.

Methods of preparation, assembly and use are provided.

### Brief Description of the Drawings

Fig. 1 is a schematic, exploded, perspective view of a cartridge according to the present disclosure.
Fig. 2 is a schematic side elevational view, depicted in partial cross section, of a filter cartridge according to Fig. 1; the cartridge of Fig. 2 being useable in, and being shown in association with a portion of, the assembly of Fig. 3.
Fig. 3 is the schematic perspective view of a filter assembly including a filter cartridge therein, according to the present disclosure.
Fig. 4 is a schematic cross sectional view of the assembly depicted in Fig. 2, shown during a filtration operation; the view of Fig. 4 being from the point of view of line 4-4, Fig. 2.
Fig. 5 is an enlarged fragmentary view of a portion of the arrangement shown in Fig. 4.
Fig. 6 is a schematic view analogous to Fig. 4, depicted during a period of no flow or no filter operation.
Fig. 7 is an enlarged fragmentary view analogous to Fig. 5, depicted during a period of no flow.
Fig. 8 is a schematic perspective view of an outer liner component useable in the assembly of Fig. 2.
Fig. 9 is an enlarged cross sectional view of a portion of the component depicted in Fig. 8.
Fig. 10 is a view analogous to Fig. 9, depicting an alternative to a portion of the component depicted in Fig. 8.
Fig. 11 is a plan view of a valve sheet component usable in a cartridge assembly according to the present disclosure.
Fig. 12 is a schematic depiction of a step of preparing a component according to Fig. 11.
Fig. 13a is a schematic depiction of an alternate configuration for valves usable in a component depicted in Fig. 1.
Fig. 13b is a schematic depiction of an alternate configuration for valves usable in a component depicted in Fig. 1.
Fig. 13c is a schematic depiction of an alternate configuration for valves usable in a component depicted in Fig. 1.
Fig. 13d is a schematic depiction of an alternate configuration for valves usable in a component depicted in Fig. 1.
Fig. 13e is a schematic depiction of an alternate configuration for valves usable in a component depicted in Fig. 1.
Fig. 13f is a schematic depiction of an alternate configuration for valves usable in a component depicted in Fig. 1.
Fig. 13g is a schematic depiction of an alternate configuration for valves useable in a component depicted in Fig. 1.
Fig. 13h is a schematic depiction of an alternate configuration for valves useable in a component depicted in Fig. 1.
Fig. 13i is a schematic depiction of an alternate configuration for valves useable in a component depicted in Fig. 1.
Fig. 13j is a schematic depiction of an alternate configuration for valves useable in a component depicted in Fig. 1.
Fig. 13k is a schematic depiction of an alternate configuration for valves useable in a component depicted in Fig. 1.
Fig. 13l is a schematic depiction of an alternate configuration for valves useable in a component depicted in Fig. 1.
Fig. 14 is a schematic cross sectional view of a second embodiment of a cartridge assembly according to the present disclosure.
Fig. 15 is a schematic depiction of a step of servicing the assembly of Fig. 14.
Fig. 16 is a schematic perspective view of an alternate outer liner component useable in place of the component depicted in Fig. 8.
Figs. 17a-f are schematic views of some alternate aperture shapes, for a liner component useable in the arrangement depicted in Fig. 1.

### Detailed Description

In general, the current disclosure concerns fluid filters, typically liquid filters. A typical environment of use, will be in association with a lube (oil) filter, hydraulic fluid filter or engine fuel filter. Therefore, although the invention may find application in other contexts, herein it is characterized in such an environment of use.

In general, the typical application will be in association with a "cartridge" type of filter. The term "cartridge" in this context is generally used to refer to a liquid filter in which the filter element is a removable and replaceable, i.e., serviceable, component, relative to a filter housing. That is, during servicing the housing is retained but the filter cartridge is removed and replaced. The techniques described herein are particularly well adapted for such applications, and the embodiments described herein are of the cartridge type.

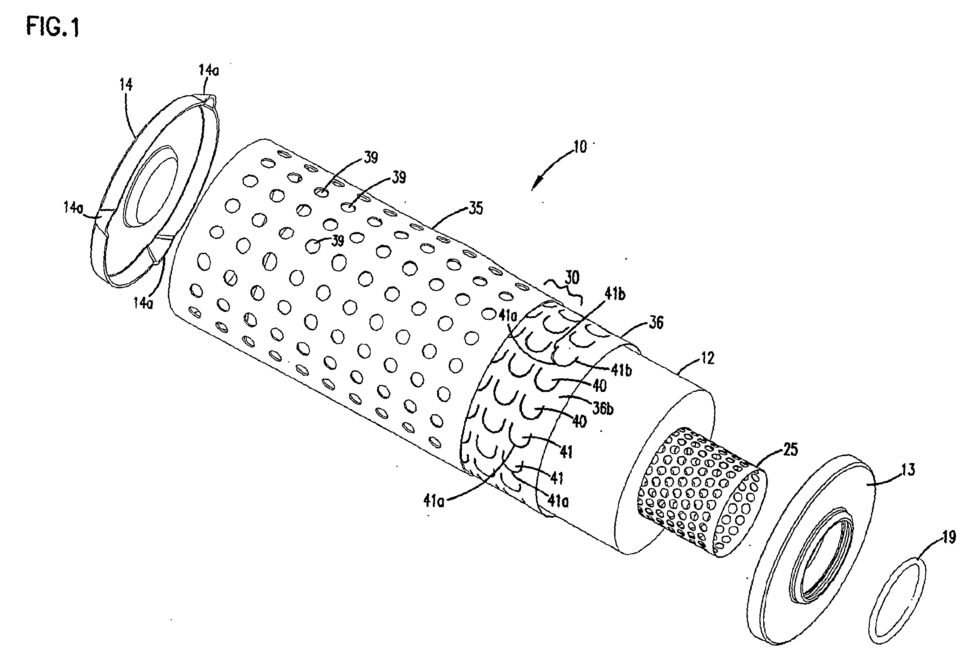

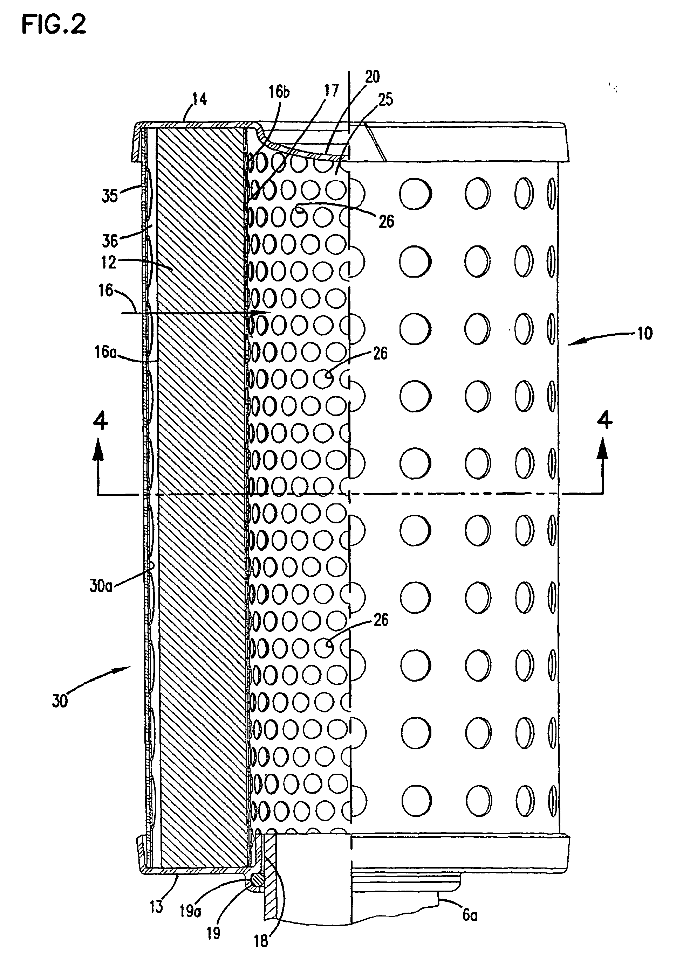

Filter cartridges according to the present disclosure can be utilized in a wide variety of filter systems. For example, the systems can be of a filter head and bowl type, or alternatively of a top load type. A filter head and bowl type, generally utilizes a filter head positioned above a cartridge and housing bowl. Such an arrangement is shown, for example, in U.S. 6,322,697, in Figs. 1 and 2. A filter cartridge as described herein, could be used in such an arrangement.

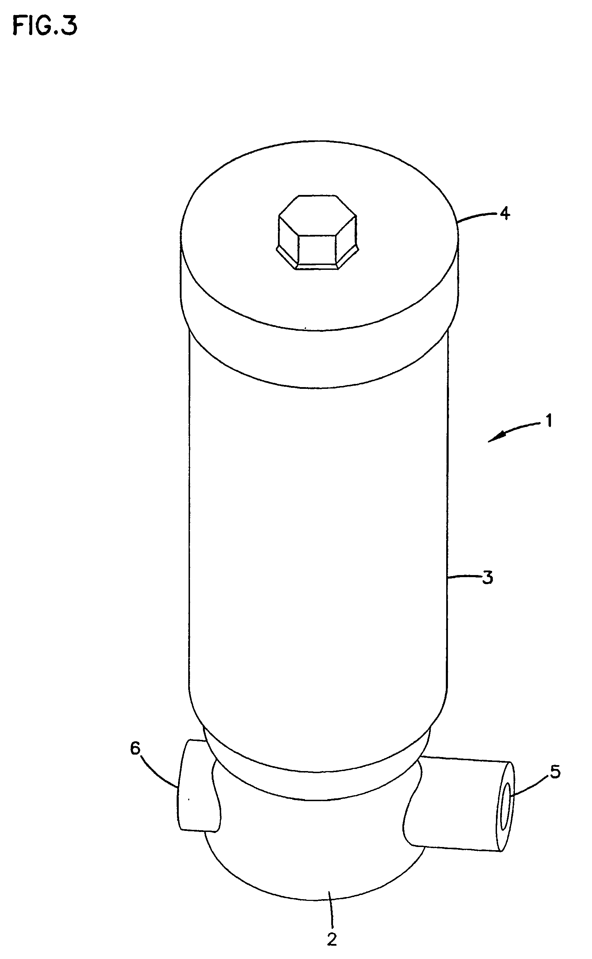

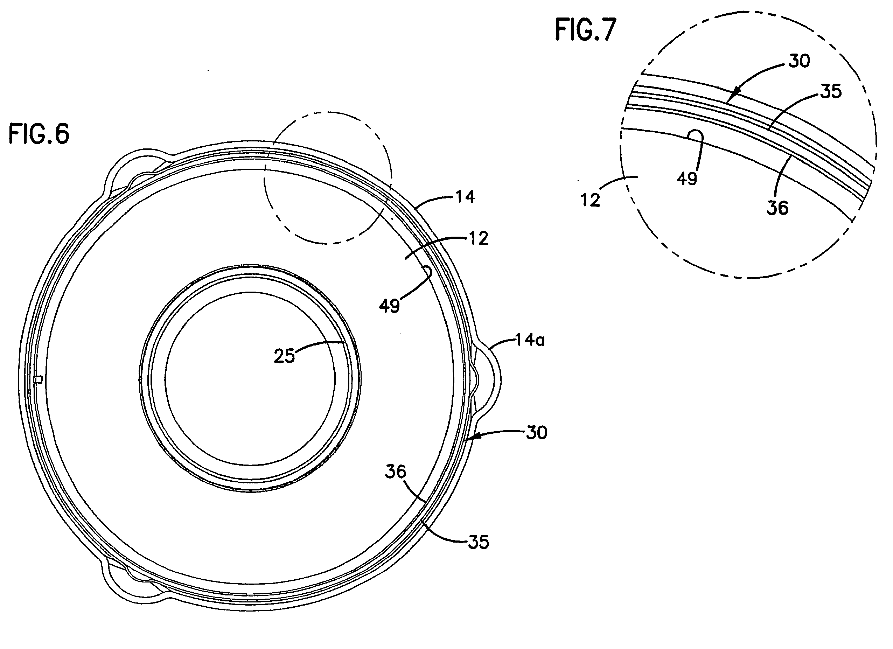

On the other hand, a top load assembly is one which involves obtaining access to the cartridge, for changing, through a top of the system as opposed to through a bowl located in a bottom of the system. A top load system is generally illustrated in Fig. 3, of the present disclosure. In addition, a top load assembly useable with an in-tank filter, such as depicted in U.S. patent 6,217,755 at Fig. 5, can be adapted to include a outer liner/valve construction according to the present disclosure.

The reference numeral 1, Fig. 3, generally depicts a liquid filter assembly utilizing components according to the present disclosure. In general the assembly 1 comprises a filter base 2; and a filter housing 3 having an access cover 4. The filter base 2 is generally mounted on equipment such as a vehicle, in a flow line for liquid, such as oil, hydraulic fluid or fuel, to be filtered. Liquid to be filtered enters the filter assembly 1 through inlet 5, in filter base 2, and leaves, after filtering, through an outlet (not shown) in outlet end 6. In general, filter base 2 is constructed and arranged: to direct inlet flow into housing 3, where the liquid is passed through a filter element; and, once filtered, to direct the liquid back into filter base 2 and outwardly through outlet end 6.

Housing 3, except for cover 4, is typically permanently mounted on the filter base 2. By "permanently" is this context it is meant that generally the housing 3 is retained in position, even when a cartridge is replaced, as described below. The housing 3 can be formed integrally with base 2; however, it can also be separately attached.

Attention is now directed to access cover 4. Access cover 4 is removably mounted on housing 3, for example through a threaded engagement. When access cover 4 is removed, access to an interior of the housing, and a filter cartridge removably positioned therein, is obtained.

Attention is now directed to Fig. 2. In Fig. 2, a serviceable filter cartridge component or filter cartridge 10 is depicted. In general, cartridge 10 includes filter media 12, operably positioned for filtering flow of fluid therethrough, in use. The particular cartridge 10 depicted also includes first end cap 13 and second end cap 14. For the particular embodiment shown, when the cartridge 10 is operatively positioned within the housing 3 of the assembly 1, with the cover 4 thereon, liquid flow is directed through the media 12 from outside to inside, in the general direction of arrow 16. Thus, the filter media 12 has a dirty or upstream side 16a and a clean or downstream side 16b. For a typical embodiment, the media 12 is arranged to surround and define an internal volume 17 at the clean side 16b thereof.

For the particular cartridge 10 depicted, end cap 13 is an "open" end cap and end cap 14 is a "closed" end cap. By "open" in this context, it is meant that end cap 13 defines a central open aperture 18 in liquid flow communication with volume 17. Thus, filtered liquid can pass outwardly from cartridge 10 through aperture 18. (In some alternate embodiments, both end caps can be open end caps, for example when a cartridge according to Fig. 5 of U.S. 6,217,755 is provided with a liner/valve construction according to this disclosure.)

For the particular embodiment depicted, aperture 18 is depicted with an internal seal ring 19, typically an o-ring 19a, positioned therein, although alternate sealing arrangements are possible. In use, aperture 18 would be positioned over an outlet tube (shown at 6a) extending from filter base 2, with a seal provided by ring 19. This helps allow flow of filtered liquid from volume 17 into filter base 2, and outwardly through outlet 6, while inhibiting dirty (unfiltered) liquid flow from undesirably passing the media 12.

By "closed" in connection with end cap 14, it is meant that end cap 14 includes no apertures therein, to allow normal fluid flow therethrough in use.

In some applications, a central portion 20 of end cap 14 could be provided with a by-pass valve construction, not shown, if desired. In one such application, a bypass valve would be positioned in the end cap 14 under biasing pressure, for example from a spring, that would keep the valve closed unless a pressure differential across the media 12 raises to a bypass valve opening pressure, at which time the bypass valve would open and allow some liquid to bypass the media 12 and enter volume 17. In some instances secondary filters are provided, to facilitate protection of the equipment under bypass operation. A bypass valve is typically utilized when there is some concern that the equipment which operates utilizing the liquid flow could be damaged if the filter becomes sufficiently occluded beyond defined a service point or interval. Herein, even when end cap 14 includes an aperture therethrough, with a bypass valve therein, the end cap 14 will still be referred to as a "closed" end cap, since, in normal operation (when the bypass valve is closed) no flow is permitted through the end cap 14.

End caps 13 and 14 can be constructed of a variety of materials. Stamped metal materials operate quite well for end cap(s) 13 and/or 14. However, when a "metal free" construction is desired, end caps 13 and 14 would typically be molded from polymeric material, for example an incinerable plastic.

The term "metal free" as used in the previous paragraph and generally herein, is meant to refer to a cartridge which includes substantially no metal components. In certain preferred applications, the cartridge will comprise less than 5% by weight, and preferably less than 2% by weight metal (and typically noand thus metal free) components. It is an advantage to techniques according to the present disclosure, that an arrangement as described can be provided in a filter cartridge 10 which is completely metal free.

In general, the media 12 can comprise a variety of media formulations, depending on the particular application. It is anticipated that in many embodiments the media 12 will comprise a cylinder, typically a pleated cylinder, which extends between end caps 13 and 14. The media 12 will typically comprise cellulose fibers, glass fibers, synthetic polymeric fibers, or a mixture thereof. The media 12 can be secured to the end caps 13 and 14 by a potting material (not shown), or the end caps 13, 14 can be molded directly onto the media 12, depending on the media and/or the end cap material. The particular choice of material for the media 12 is generally not critical to application of the techniques described herein, but rather is a matter of choice depending on the material to be filtered, contaminant to be collected, and conditions of filtering. Conventional materials may be used in typical, anticipated, applications.

As will be apparent from the following descriptions, the applications and principles described herein, especially in connection with the liner/valve construction described below, can be applied in a variety of alternate systems. For example, they can be applied with filter cartridges that have two open ends caps (i.e., which are open at both ends); they can be applied to filter cartridges that are used with bypass constructions that are or are not circumscribed by the filter cartridge; and/or they can be used with various flow regulating valve arrangements and other systems. In general, the specific techniques disclosed herein relate to preferred arrangements for maintaining contaminant in association with the filter cartridge, during servicing. The remaining features of cartridge 10 are described to characterize a working embodiment, as an example.

For the particular embodiment depicted in Fig. 2, the cartridge 10 includes a downstream (in this instance inner) liner 25. The inner liner 25 depicted is cylindrical and is porous to passage of liquid (i.e., contains holes or perforations or is permeable), and generally extends between ends caps 13 and 14, supporting the media 16 along interior side 16b or downstream (clean) side thereof. Direct contact between the liner 25 and the media 12 is not required, although in typical applications the two will abut one another.

Above, the inner liner 25 was characterized as "porous" or "permeable" to the liquid or fluid being filtered. By this it is meant that it contains apertures 26 or is otherwise perforated or contains openings, to allow fluid to pass therethrough. The particular inner liner 25 depicted is a molded liner of plastic, and thus is incinerable. If the presence of a metal component is not an issue, a perforated spiral wound liner, expanded metal liner or perforated metal liner, for example, can alternatively be used for the liner 25.

The size of the apertures 26 is a matter of choice, for any specific application. It is anticipated that in a typical situation, the liner 25 will be at least 10% porous or open; i.e., have a porosity of at least 10%. By this it is meant that of the total area defined by the liner 25, at least 10% is defined by the apertures. In a typical application, the liner 25 will have a porosity within the range of 15% to 50%, inclusive. By the term "inclusive" in this context, it is meant that the end points identified are included within the range.

The features thus far characterized are fairly typical or standard for many serviceable filter cartridges in liquid filter systems. However, the cartridge 10 includes an additional feature not generally found in standard arrangements. This additional feature is a liner/valve (or support/valve) construction 30 which provides for contaminant collection and retention.

The particular liner/valve construction 30 depicted is positioned to extend along media 12, specifically along upstream side 16a. (For the embodiment shown the liner/valve construction 30 circumscribes or surrounds the media 16.) Typically, an inside surface 30a of the liner/valve construction 30 would be spaced from the media 16, by a minimal gap, for example of the order of about 0.5 mm to 10.0 mm, inclusive. The purpose of the gap, as will be understood from the detailed description below, is to allow unencumbered operation of valves described below, in the liner/valve construction 30.

The liner/valve construction 30 for the typical embodiment includes two components: a perforated support 35; and, an internally received valve sheet 36. In a typical operation, as explained in more detail below, the liner/valve construction 30 operates to: (a) allow, during normal fluid operation, liquid flow through the support 35 and the valve sheet 36, into the media 12, carrying contaminant or sediment therewith; and (b) when fluid flow pressure is reduced or stopped, to retain contaminant or sediment between the valve sheet 36 and the media 12, while the cartridge 10 is being serviced, i.e., removed and replaced. In a typical embodiment such as that depicted in the drawings, the two components of the liner/valve construction 30 are individually pre-formed and assembled together, for operation. Detail concerning typical construction and operation of a preferred outer support 35 and valve sheet 36, to accomplish this, will be understood from the following detailed discussion.

Attention is now directed to Fig. 1, depicting cartridge 10 in exploded perspective view. The individual components are viewable, namely: o-ring 19, end caps 13 and 14, media 12, inner liner 25, and liner/valve construction 30 comprising perforated liner support 35 (in this instance an outer support) and valve sheet 36. It is noted that, in Fig. 1, one can see that end cap 14 includes three (optional) outwardly projecting bumps or protrusions 14a thereon, oriented radially spaced from one another around an outer periphery of the end cap 14. These optional protrusions 14a operate to help keep the cartridge 10 centered in the housing 3 during operation.

In general, perforated liner 35 includes at least one, and typically a plurality, of apertures 39 therein, and, in the embodiment depicted, liner 35 is a cylindrical outer liner. The valve sheet 36 includes at least one, and typically a plurality, of valves 40. As an example, there could be one valve 40 associated with, or adjacent, each aperture 39, during assembly, although alternatives are possible. At the present time, it is not believed that there is any specific number of apertures 39 or valves 40 that is required. It is expected that this will be a matter of choice, related to desirable filter throughput, preferred pressure differential, and other operating parameters which will vary from system to system. It is anticipated that a typical filter will have at least 10 , usually at least 20 and often at least 100 (for example up to 1000) apertures 39 in the liner 35, and at least 10 usually at least 20 and often at least 100 (for example up to 1000) valves 40, in the valve sheet 36. It is also anticipated that in general the liner 35 will be at least 5% porous, typically 10% to 50% porous; and, the valves 40 will occupy at least about 10% of the surface area of the flexible sheet 36, typically 30% to 80 %.

In general, the valves 40 comprise cut valves 41; i.e., each valve is the result of one or more cuts through the sheet 36. Various types, shapes and sizes of cut valves 41 can be used. The particular embodiment depicted in Fig. 1, utilizes cut valves 41 formed as a result of curved U-shaped cuts, in this instance with a bottom (or center) of each U generally directed in the same direction and circumferentially around the media 12.

In this context the "bottom" of the curved U, is meant to refer to the rounded center 41a as opposed to the sides 41b; and, the term "directed" is meant to refer to the direction each U "points," if the center of the U is viewed as the head of an arrow. The term "circumferentially" around the media, in this context, is meant to refer to pointing in a ring circumscribing the media 12 as opposed to aligned axially along the media pleats. When the term "u-shaped" or variants thereof is used herein, there is no requirement that the opposite sides (41b) extend parallel to one another, unless specified.

Still referring to Fig. 1, it is noted that with many materials from which sheet 36 might be chosen, if sheet 36 is held curved or coiled as shown in Fig. 1 without being completely inside of liner 35, some of the valves 41 might tend to bow outwardly from remainder 36b of sheet 36. The valves 41 are not drawn this way in Fig. 1, for convenience. Diagonal (or beveled) edges to selected parts of the cuts can be used to minimize such bowing or projection.

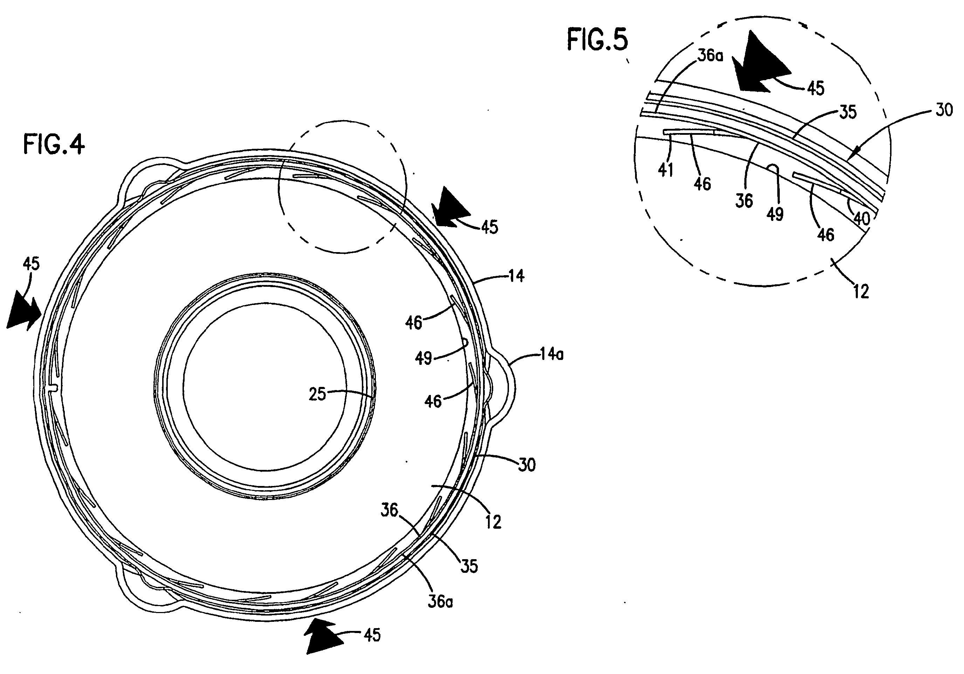

Attention is now directed to Fig. 4. Fig. 4 is generally a schematic view of the cartridge 10 taken in cross section, along line 4-4, Fig. 2 (but looking down, i.e., with end cap 14 positioned down). In Fig. 4, the cartridge 10 is depicted under an ordinary operating pressure of liquid flow during filtering, in the general direction of arrows 45. Under the liquid pressure flow, the liquid will pass through perforated outer liner support 35 and will apply a flow pressure against an outer or upstream surface 36a of valve sheet 36. Under this pressure, the cut valves 41 will act as flaps 46 and be biased, flexed or deformed open, in this instance inwardly, to allow the fluid to pass toward and into media 12. This allows the liquid and contaminant carried therein to enter volume or gap 49 defined between the liner/valve construction 30 and the media 12 (the media 12 being depicted schematically in the drawings).

In Fig. 5, an exploded view of a portion of the arrangement shown in Fig. 4 is depicted, showing the cut valves 41, in enlarged view, deformed toward media 12.

When pressure for liquid flow in the direction of arrows 45 is stopped, or at least is reduced to below an opening pressure for the cut valves 41, the arrangement 10 will generally be as depicted in Figs. 6 and 7. Referring to Fig. 6, a view generally analogous to that shown in Fig. 4, there is no deformation from the flaps 46 (Fig. 5) depicted. Rather, each cut valve 41 is in a rest position, and each is not under substantial deformation from pressure. This means that the cut valves 41 (Figs. 4 and 5) will generally close the liner/valve construction 30 to passage of contaminant therethrough. In Fig. 7, this is depicted in enlarged, fragmentary, view.

In general, when the valve sheet 36 is under a liquid flow or pressure deformation for filtering flow, generally as indicated in Figs. 4 and 5, the valve sheet 36 or cut valves 41 will be characterized as in "open" positions; and, when in the configuration is as shown in Fig. 6, i.e., not under liquid deformation pressure, the valve sheet 36 or each valve 41 will be referred to as in the "closed" orientation. The term "closed" in this context is not meant to indicate or require that valve sheet 36 is necessarily sealed to liquid flow therethrough.

From a review of Figs. 4-7, operation of the liner/valve construction 30 will generally be understood. In a typical liquid filtering operation, the liner/valve construction 30 will operate with valve sheet 36 in the open configuration, Figs. 4 and 5. In such an operation, liquid and contaminant (sediment) can pass (along with liquid flow) through the liner/valve construction 30 and to the media 12. Selected contamination carried by the liquid will be filtered out by the media 12, and at least some can be held in the gap 49 between the media 12 and the valve sheet 36. When pressure and liquid flow are stopped, however, the valves 40 will not be deformed as open or inwardly. Indeed, the memory of the material from which the valve sheet 36 is formed, will tend to close the cut valves 41, leaving the contaminant or sediment retained within gap 49 in the cartridge 10. Thus, when assembly 1 of Fig. 3, is opened, and the cartridge 10 is removed, contaminant or sediment on a surface of media 12 or within gap 49 will tend to remain contained within the removed cartridge 10.

A typical servicing operation would involve removal of cartridge 10, which has been contaminated, and replacement with a new cartridge. If made of appropriate non-metallic materials, the used cartridge 10 can be readily incinerated.

Above, the valves 40 in the preferred embodiment are characterized as cut valves 41. By the term "cut valves" in this context, it is meant that the valves 40 are formed by cuts through a flexible film or sheet from which the valve sheet 36 is formed. The use of cut valves 41 as valves 40 in valve sheet 36 will typically be preferred, for ease of manufacture and assembly, as well as convenient operation. The cut valves can be formed by a die cutting operation, although alternative processes, for example chemical cutting or laser cutting can be used.

While there is no requirement that there be a cut valve 41 associated with each aperture 39 in the outer support 35, in some embodiments there may be such an association. The term "associated" or variants thereof in this context, is meant to refer to valve 40 covering, or adjacent, an aperture 39, when the valve sheet 36 is in the closed orientation. That is, by the term "associated," all that is meant is a location relationship, for flow, between an identified valve 40 and identified aperture 39, typically with valve 40 covering, or adjacent, the aperture 39 when in the closed orientation.

It is anticipated in some alternative applications, one valve may be associated with more than one aperture. Also, in some applications, the arrangement may include valves that are not directly associated with an aperture; or, apertures that are not directly associated with a valve. The term "directly associated" in this context is meant to refer to an overlapping association.

A variety of configurations can be utilized for the apertures 39 in the support 35, and for the cut valves 41 in valve sheet 36. For the particular embodiment depicted, apertures 39 in the outer liner 35 are round (circular), and each cut valve 41 has a U-shape; in particular a curved U-shape. The typical curved U-shaped depicted, has a bottom formed or cut to a circular radius, usually a radius of at least 2% larger, and typically at least 15% larger, than a radius of the apertures 39, when the apertures are round.

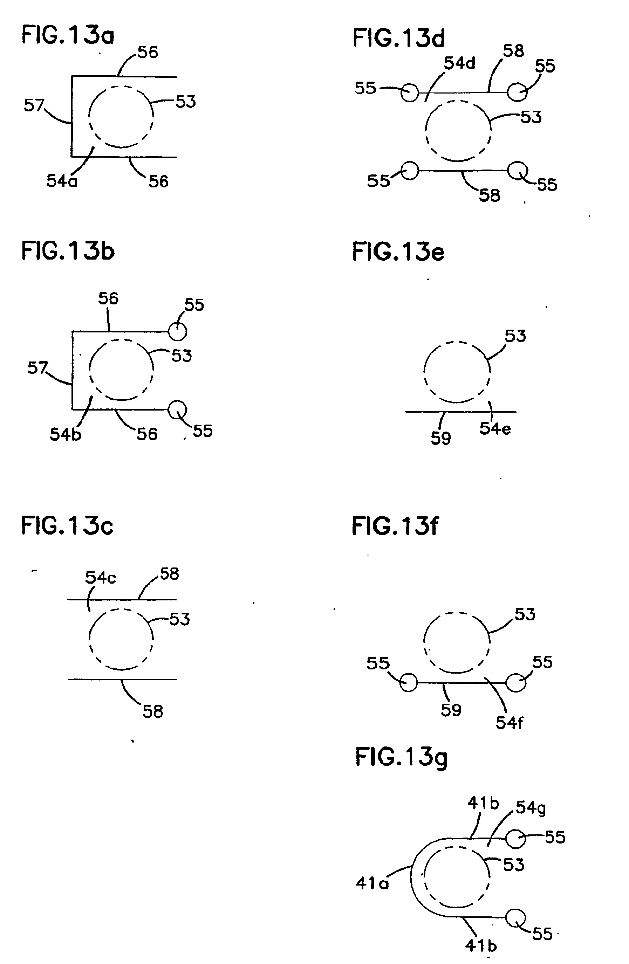

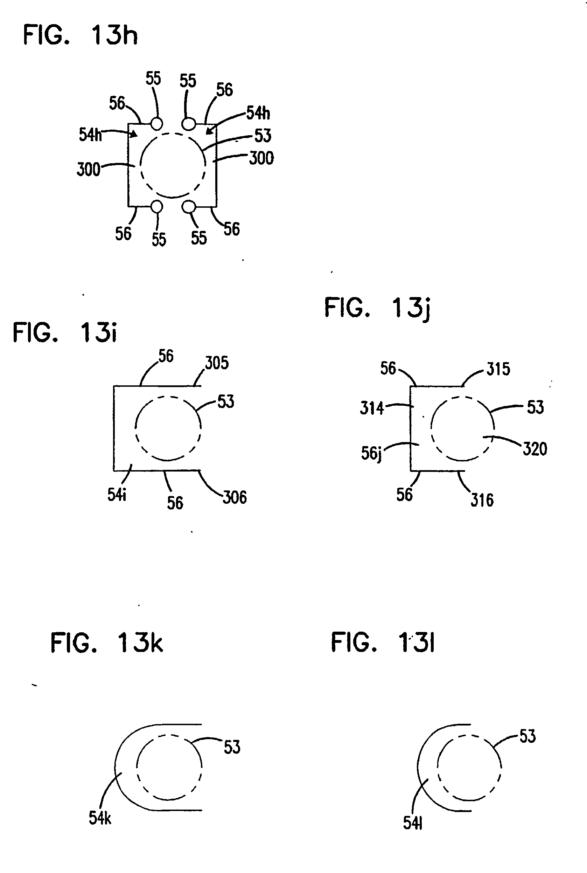

Attention is now directed to Figs. 13a, 13b, 13c, 13d, 13e, 13f, 13g, 13h, 13i, 13j; 13k and 13l which show some examples of alternatives for the cut valves. In each case, an aperture in the outer liner support 35 is depicted in phantom at 53. In each case, a cut valve is depicted at 54, for example at 54a, 54b, 54c, 54d, 54e, 54f, 54g, 54i, 54j, 54k and 54l. Circles as indicated at 55 are stops or end punches to inhibit tearing.

From review of Figs. 13a-13l, it will be understood that, in general, for preferred operation of a valve 40, what is preferred for a cut valve 41, is one or more cuts through the valve sheet 36 at a location associated with an aperture in liner 35, during assembly, such that a deformation of valve sheet 36 can open the cut to allow liquid flow through sheet 36, and, so that memory of the material of sheet 36 can tend to close the sheet 36 to inhibit collected contaminant from coming back out of gap 49, during servicing. The configurations of 13a-13l are indicated simply as some of the possible alternative examples. The variations of figures 13a, 13b, 13h, 13i and 13j will generally be referred to as "boxed u-shaped cut valves" with the variation of 13b, for example, showing end punches 55 to inhibit tearing. The term "boxed" in this context is meant to refer to a U shape which has two straight sides 56 and a straight center 57. The term "boxed u-shape" and variants thereof is not meant to indicate whether the sides 56 are parallel, unless specified.

The arrangements of 13c and 13d, will be generally characterized as "opposed line cut valves" with the variation of 13d indicating punch stops 55 to inhibit tearing. In this context, the term "opposed line cut valves" is meant to refer to two line cuts 58 positioned such that when the sheet valve is operably positioned relative to the outer support, the lines 58 are on opposite sides of an associated aperture 53. It is noted that for the particular embodiment depicted in Figs. 13c and 13d, the lines would generally be directed circumferentially, i.e., around the media 12, parallel to one another and generally orthogonal to a central axis of the cylinder, when used. Such an organization will generally be referred to herein as a "circumferential cut valve."

The arrangements of 13e and 13f will generally be referred to as "single line cut valve" embodiments. The term "single line cut" is meant to refer to a cut oriented as a single straight line 59 associated with each valve. In the particular arrangement depicted in Figs. 13e and 13f, each valve would be defined by a circumferential line cut, i.e., each line would extend circumferentially around the media, and parallel to the other cuts. The cut lines would also be generally perpendicular to a central longitudinal axis of the cylinder. For the instance shown, each line is below an associated aperture. Of course in middle rows of apertures 53, each line would be between a pair of apertures 53.

The arrangement of 13g is a curved or rounded u-shaped cut, with sides 41b and center 41a using punches, holes or circles 55, as stops or end punches to inhibit tearing.

The arrangement of Fig. 13h will be referred to as a double oppositely directed, boxed u-shape, since two boxed u-shapes 300, oppositely pointed, are used. Variation of this would be an arrangement that does not utilize the stops, holes or cuts 55. Another variation would be one which utilizes a curved u-shape for each cut valve, as opposed to the boxed u-shape.

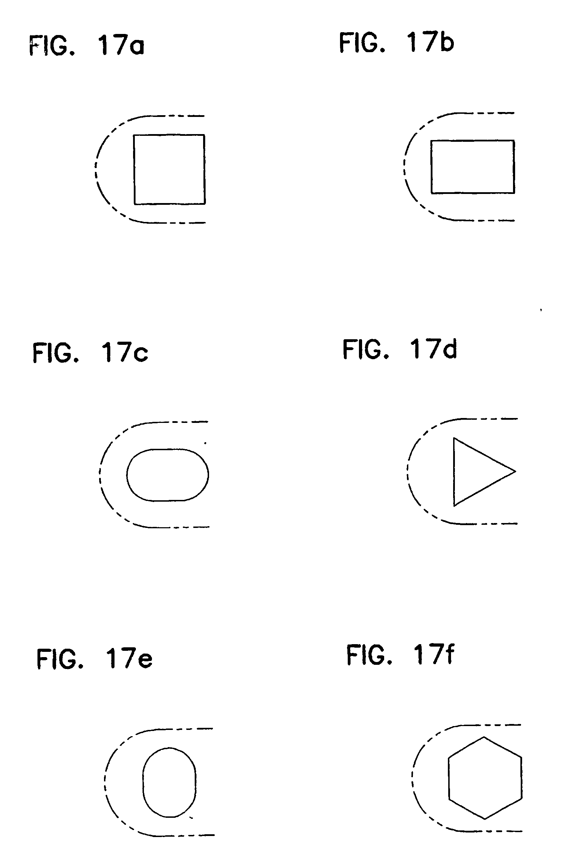

Fig. 13i illustrates an alternate boxed u-shape, in which the end terminii 305, 306 of the U are positioned such that a straight line between them would extend along a line tangential or nearly tangential to the outside of the associated aperture 308. When a line connecting the end terminii of cut valve is at or is outside but within 2 mm. of a tangent for the associated aperture, the cut valve will be characterized as having a pair of cut valve ends defining a line "substantially tangent to an associated aperture." The term "substantially tangent to an associated aperture" may be applied whether the aperture is circular, or has another shape, for example a shape according to Figs. 17a-f. This variation can be employed using a curved u-shape valve, as indicated in Figure 13k.

Figure 13j indicates another variation, in which a cut u-shape valve, in this case boxed shape valve member 314, has ends 315, 316 which are positioned such that a line between the ends would extend across an associated aperture 320. In this instance the ends are positioned such that a line between them would approximately bisect the aperture 320. In general, when the end terminii 315, 316 are positioned such that a line between them would extend across an associated aperture, they may be characterized as "ends which define a chord for an associated aperture." When the chord is one which would bisect the associated aperture, the cut valve may be specifically referred to as having "ends which define a diameter line for the associated aperture." This variation can be applied utilizing a curved u-shaped valve member, as well as a boxed u-shape valve member, as indicated in 13l. The term "ends which define a chord for an associated aperture" can be used even when the aperture is non-circular, for example with any of the shapes 17a-f.

Referring to the u-shaped cut valves 41 indicated in Fig. 1, such cut valves generally result in the formation of a deformable tongue or flap 46 (Fig. 4) in the valve respectively. Such cut valves 41 will sometimes be referred to as "flap" valves, as a result of the generation of the tongues or flaps that can deform (fold) inwardly as shown in Figs. 4 and 5. It is noted that cut valves 54a, 54b, 54g and 54h-1 (in Figs. 13a, 13b, 13g and 13h-l respectively) are also flap valves.

Alternatively, the cut valves of Figs. 13c and 13d, i.e., the opposed line cut valves 54c, 54d; and, the single line cut valves 54e, 54f (of Figs. 13e and 13f respectively), do not involve generation of a foldable flap. Rather, each involves generation of one or more openings or slits which can deform or more widely open under pressure, to allow contaminant to pass therethrough. Such valves, which do not involve the formation of actual flaps (foldable around living hinges), will generally be referred to herein as "slit valves."

In typical operation, a flap valve will generally swing open (along a living hinge) under biasing liquid pressure and, as a result of the memory of the material from which is closed, generally swing or bias closed when the pressure is released. A slit valve on the other hand, will bias open under the pressure, and may tend to tighten back up or close somewhat when the flow pressure is released. With a slit valve, biasing closed may sometimes be less of an issue (then with a flap valve) since it may be difficult for the contaminant or sediment to pass outwardly through the slit valve even if the slit valve tends to remain a little deformed (somewhat opened) after the pressure is released.

Herein the term "open" when used to refer to a flap valve, is meant to refer to a condition under biasing pressure in which the flap is biased away from the support 35. The term "open" when used with respect to a slit valve, is meant to refer to the condition in which, under biasing pressure, the slit is biased open to allow contaminant to pass therethrough.

The term "closed" when used to refer to a valve, simply refers to the condition or deformation resulting when the pressure of fluid flow therethrough is reduced or stopped. The term "closed" does not necessarily mean that the valve is positioned such that no liquid can pass through it. However, the term "closed" when used to refer to a flap valve, will typically refer to a condition in which the flap is biased back toward the outer liner, i.e., when the pressure from fluid flow is reduced.

Preferred materials, configurations and assembly methods, for the liner/valve construction 30, and other components, are characterized below.

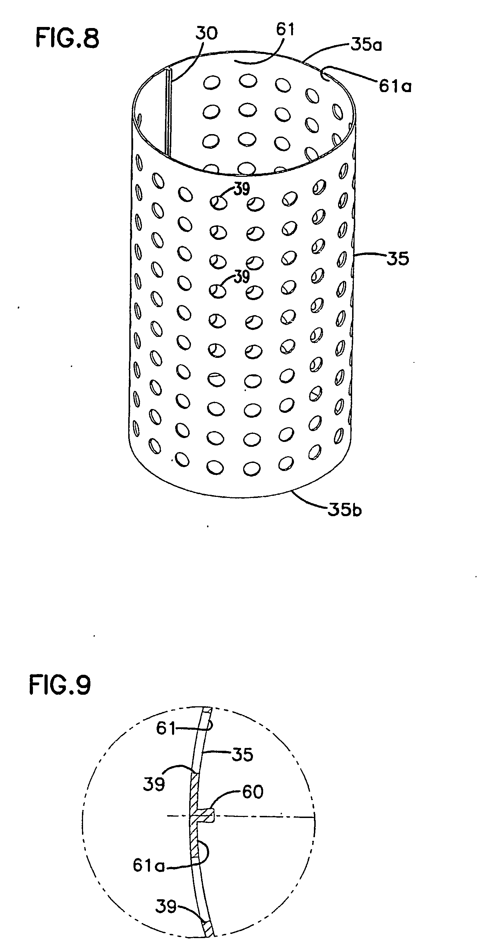

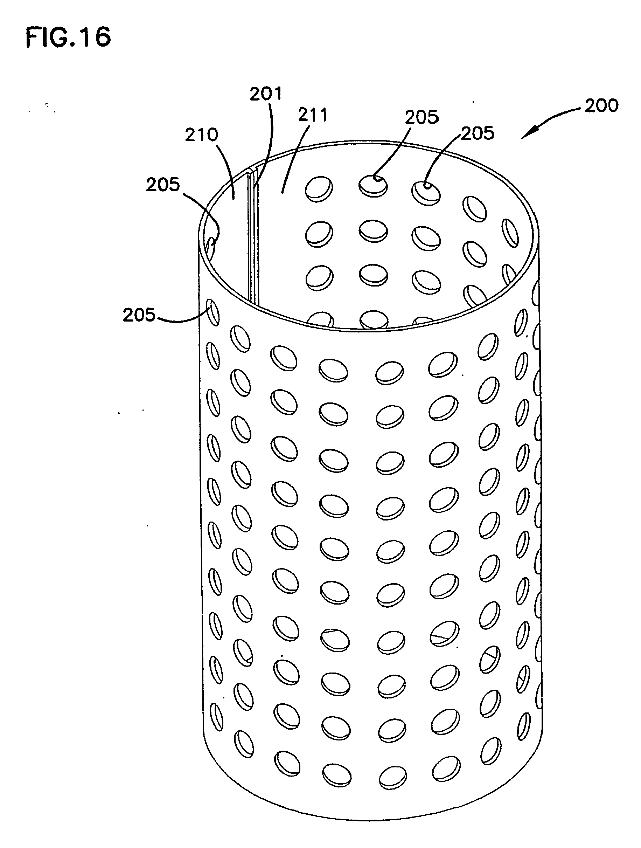

Referring to Fig. 8, perforated liner 35, which in this instance is cylindrical, is depicted. Besides apertures 39, an internal feature comprising positioning rib 60 is depicted. In Fig. 9, a cross sectional view depicting rib 60 is provided. (A preferred alternative to the liner 35 is discussed below, in connection with Fig. 16.)

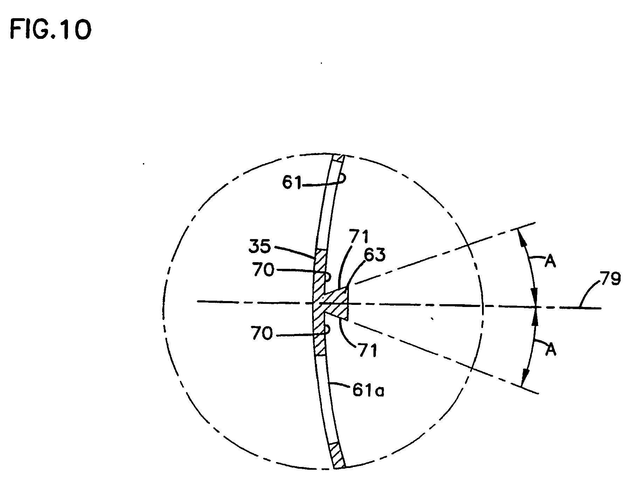

In general, rib 60 projects radially inwardly from inner surface 61, of perforated outer liner support 35. In general, inner surface 61 defines an interior 61a of perforated outer liner support 35. In Fig. 10, a view analogous to Fig. 9 is shown, of an alternate rib 63.

It is anticipated that, in typical applications, the perforated liner support 35 will be molded of a plastic material, with rib (60 or 63) formed integrally therewith. Operation of the ribs (60 or 63) will be understood from the following description relating to the valve sheet 36 formation and operation.

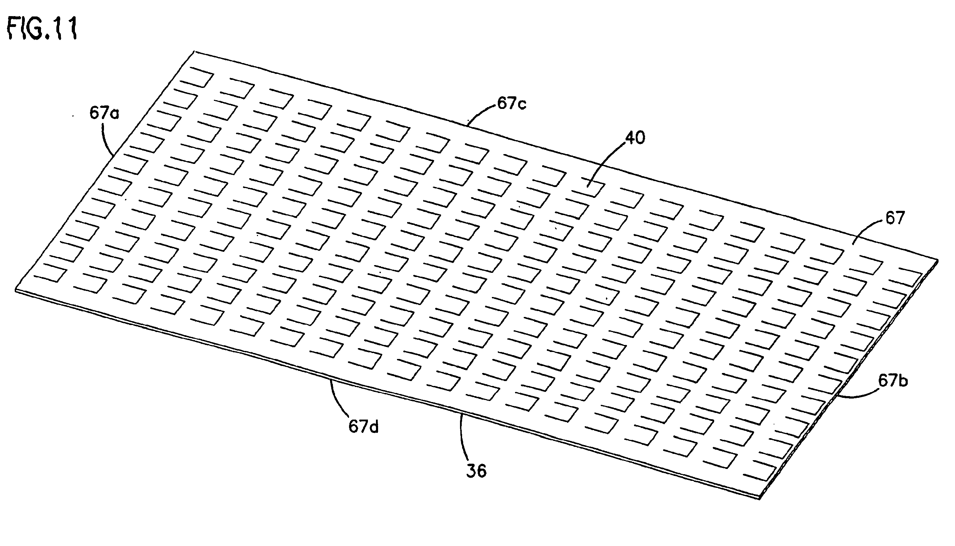

Attention is now directed to Fig. 11, which depicts an example of a valve sheet 36 prior to being curled, curved or coiled and positioned within outer liner construction 30. In general, the valve sheet 36 comprises a flat or substantially flat sheet 67 with valves 40 therein. The sheet 67 is of an appropriately flexible material such that it can be flexed, or curved, into an appropriate cylindrical shape under hand pressure or by automated process, to be inserted into an interior 61a of perforated outer liner support 35. With some alternate manufacturing techniques the cut valves could be put into the sheet after coiling or simultaneously with coiling.

It is noted that sheet 36 in Fig. 11, is depicted with boxed u-shaped valves (similar to Fig. 13a) therein, as opposed to curved u-shaped valves 41 as viewable in Fig. 1. This is to indicate that valve shape is a matter of choice, although curved u-shape valves, especially as shown in Figs. 13k and 13l have been found to be preferred. In other aspects, the valve sheet 36 may be in accord with valve sheet 36 in other drawings.

In general, valve sheet 36 will be formed of a material of appropriate elasticity to try to return to toward the flat or substantially flat configuration 67, when released inside of perforated outer support 35. This will bias the sheet 36 outwardly against interior surface 61, to retain the sheet 36 in position. Examples of usable materials include, for example, a plastic sheet, for example 0.2 mm to 0.5 mm thick sheet of a polyoxymethacrylate (POM); or, if, metal is used, a spring steel sheet, for example 0.1 mm thick sheet of spring steel. Of course alternative thicknesses and materials are useable. In general, the particular material for the sheet 36 is not critical, nor is the thickness, as long as these variables are selected to allow for appropriate operation as described.

In typical use, sheet 67 would be sized such that opposite end edges 67a and 67b will abut rib 60, during assembly. The rib 60, then, provides for the following:
1. The rib 61 will index the sheet 36, and thus valves 40 with respect to positioning in association with selected apertures 39 in the perforated liner 35; and,
2. The rib 61 will help retain the valve sheet 36 in appropriate position during assembly and use.

In order to provide the indexing function, it is preferred that the valves 40 be located in the sheet 36 at appropriate spacing relative to the edges 67a and 67b, and sides 67c, 67d for alignment with apertures 39 in support 35. This can be managed by controlling the size and position of the apertures 39 and the cut valves 41, during manufacture.

The particular rib 60 depicted in Fig. 18, is "continuous" or "axially continuous." By this, it is meant that the rib 60 extends continuously, without gap, from locations at or near opposite edges 35a, 35b of liner 35. It is noted that the rib 60 could be discontinuous, i.e., have gaps or modifications therein, along its length. A rib having an amount of extension(or projection) away from surface 61 of at least 2 times the thickness of the valve sheet 36, will be typical. As examples, for a POM sheet, a projection on the order of 0.4 mm to 5 mm, will be adequate for typical applications; and. for a 0.1 mm metal sheet, a projection on the order of 0.2 mm to 0.5 mm will be useable.

The alternate shape for the rib depicted at 63, Fig. 10, provides for significant undercuts 70 at sides 71 for ends 67a, 67b of sheet 67 to be received, during assembly. The undercut shape can inhibit edges 67a, 67b of the sheet 67 from deforming away from inner surface 61, under pressure from liquid during use.

In general, the term "undercut" is used herein to refer to a rib 63 or a feature of a rib which defines a space between a portion of the rib and inner surface 61. A variety of shapes can be for the undercuts 70. For example a T-shaped cross section (not shown) for the rib could be used. The particular rib 63 depicted in Fig. 10, has a somewhat V-shaped cross section, with each of sides 71 typically defining an undercut angle A, relative to a radius 79 of at least 1°, typically in the range of 4° to 10°, inclusive. (The angles are shown exaggerated in Fig. 10, relative to typical, preferred, angles.)

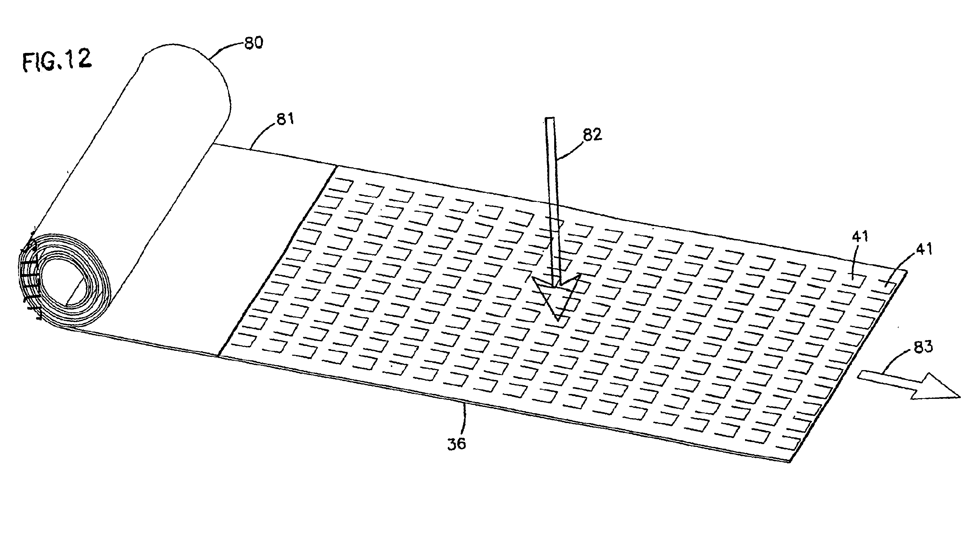

It is anticipated that a die cutting operation can be utilized for formation of the valve sheet 36. Such an operation is depicted, schematically, in Fig. 12. Referring to Fig. 12, coil 80 of sheet material 81 for formation of a valve sheet 36 is depicted. As the sheet material 81 is uncoiled from coil 80, it is directed into a die cutting operation, presented schematically by arrow 82, in which die cuts are made to extend through the material 81 and to form cut valves 41. Cuts taken perpendicularly through the sheet material 81 can be used. In some instances it may be desirable to provide an angle or bevel to one or more of the cuts. If this is done, in general the angle will preferably be provided such that the direction of easy opening or deformation for the resulting cut valve, is toward the media 12 in the assembled cartridge 10. Such diagonal or bevel cuts, then, can be used to form valves which are easier to open in one direction than in another.

The sheet material 81 will continue along the path 83 to eventually be cut into selected sheets to form flat sheets 67 (Fig. 11). These would then be rolled or curved to be inserted within a perforated outer liner support 35 as a valve sheet 36.

In the embodiment described thus far, Fig. 2, the liner/valve construction 30 is permanently received within the cartridge 10, since it would typically be embedded in potting material or otherwise be molded to extend from end cap 13 to end cap 14. Herein when it is said that a component is "permanently" secured within or to the cartridge 10, it is meant that component is not normally separated from the cartridge 10 without damage to the cartridge 10, but rather the component is discarded with a remainder of the cartridge 10. What this means is that, for the embodiment of Fig. 2, when cartridge 10 is discarded, so is the liner/valve construction 30.

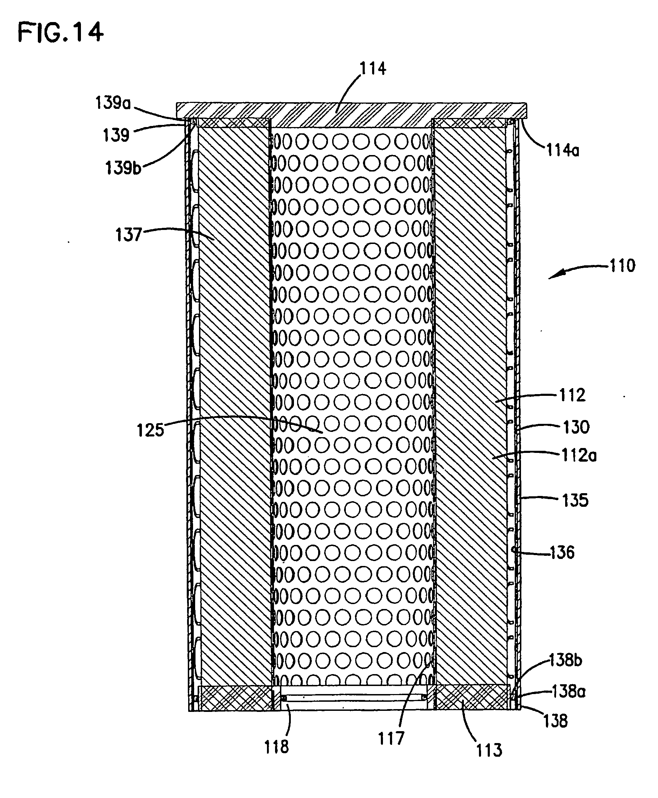

In alternative embodiments, the liner/valve construction 30 can be made such that the valve sheet 36 and the perforated outer liner support 35 can be easily reused. An example of this is shown in the embodiment of Fig. 14.

Referring to Fig. 14, a cartridge 110 is depicted comprising media 112; first end cap 113 and second end cap 114. The media 112 generally comprises a cylinder 112a of pleated media. The first end cap 113 includes a central aperture 118, providing flow communication with internal volume 117. Positioned within internal volume 117 is a perforated inner liner 125. In general, the media 112, end caps 113 and 114, and liner 125 may be as characterized above, with respect to analogous components in the embodiment of Fig. 2.

For the embodiment in Fig. 14, the liner/valve construction is indicated at 130. In general the liner/valve construction 130 comprises perforated liner or support 135 and valve sheet 136. In general, the support 135 and valve sheet 136 may be as described above, for support 35 and valve sheet 36, except as characterized below relating to features for removably securing within the cartridge 110.

In particular, the liner/valve construction 130 is not permanently secured within cartridge 110. Rather it is removably slid over a remaining portion 137 of the cartridge 110, and is sealed at seals 138, 139 to end cap 113 and 114, respectively. For the particular arrangement shown, the seals 138, 139 are formed by o-rings 138a, 139a. The o-rings 138a, 139a will typically be received within an o-ring receivers 138b, 139b molded into end caps 113 and 114. For the particular embodiment shown in Fig. 14, end cap 114 includes a shoulder 114a to operate as an axial stop to the liner/valve construction 130, when it is slid into place in the filter cartridge 110.

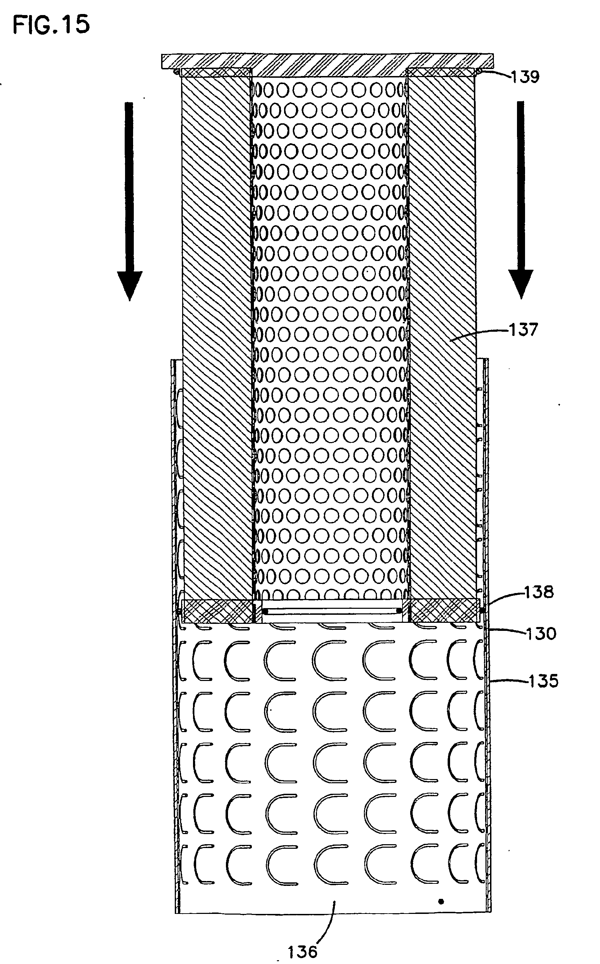

Attention is directed to Fig. 15, which depicts a step of removing liner/valve construction 130, comprising the liner support 135 and valve sheet 136, from a remainder 137 of the cartridge 110, during a servicing operation.

In general, use of the cartridge 110 would be as follows:
1. The cartridge 110 would be utilized similarly to cartridge 10, in liquid filter assembly 1.
2. When servicing is intended, the cover 4 would be separated from the remainder of the housing 3; and, the cartridge 110 would be removed from the housing 3.
3. The liner/valve construction 130 would then be removed from a remainder 140 of the cartridge 110.
4. The liner/valve construction 130 would then be fit over a replacement for the remainder 137 of the cartridge 110.
5. The resulting cartridge assembly 110 would be placed within housing 3, and the cover 4 would be reattached.

From the above characterization of the removable liner/valve construction 130, a variety of alternatives will be understood. For example, the sealing can be directed radially or axially, between the liner/valve construction, and a remainder of the cartridge 110. The o-rings described, are meant to merely be examples.

As discussed previously, arrangements herein can be used with a variety of filter configurations including for example, both bowl type systems and top load systems. With a top load system as characterized above, and in connection with the figures, the liner/valve construction provides for the benefit that, as the cartridge is removed from the housing, relatively little contaminant or sediment drops off, for example to fall into the fluid port 6a (Fig. 2). However even with a bowl type system, in which the bowl is separated from a filtered position above the bowl, a liner/valve construction as described would provide advantage due to contaminant collection and containment during the filter cartridge servicing.

Attention is now directed to Fig. 16. In Fig. 16, an alternate liner 200 to liner 35, Fig. 8 is depicted. The difference between liner 200 and liner 35, is that in liner 200, immediately adjacent to positioning rib 201, no apertures are present, on either side. That is, the apertures 205 are spaced at least 5 mm. typically at least 8 mm. and preferably at least 15 mm. from the rib 201. In general it has been found that this added spacing, provides for preferred valve operation. The liner 200 can be used with the rib variations of Figs. 9 and 10, or other variations as discussed above.

It is noted that a valve sheet similar to those characterized above, can be used in association with liner 200. That is, it is not necessary to provide the valve sheet with the absence of the valves in the area which overlaps non-perforated regions 210 and 211 in order to obtain advantage. Of course a valve sheet used with liner 200 could be constructed such that it contains valves only positioned such that each valve would overlap one of the apertures 205.

It is noted that a variety of shapes to the apertures in the liner can be used. For example the drawings illustrate circular apertures. It is anticipated that any of the variety of alternate shapes could be used, for example including a square, a rectangle, oval or polygon shapes. This is a matter of choice. Some examples of alternate aperture shapes are shown in Figs. 17a-f.

In general, with circular apertures each aperture will be about 1 mm. to about 20 mm. in radius (for example 3-15 mm.) if round, or, if the apertures are not round, typically the largest dimension across would be within about the same range of corresponding diameters (i.e., 2 mm. - 40 mm.). The typical area of the apertures would be in the range of about 3 sq. mm. - 1260 sq. mm., typically 28 - 710 sq. mm.

### Usable Materials

As indicated above, a variety of materials can be utilized for the components of the cartridge 10, 110, provided the properties are adequate for assembly and use as characterized. In this section examples, and general characterizations, of usable materials are provided.

For the support or liner 35, 135, typically a polyamide (glass filled 15-30%), a POM or other thermoplastic or thermoset plastic or elastic material will be used, if a metal free construction is desired. Such material can be molded with the indexing rib 61, 63 therein. It can also be molded with the apertures therein. In the alternative, a perforated spiral wound metal, or expanded metal liner, can be used, for example with the indexing rib (if used) separately attached.

In some instances, it may be desirable to coat an inside surface of the support or liner 35, 135, with an elastic or elastomeric material or plastic such as PTFE (polytetrafluoroethylene), to enhance valve closing characteristics.

As previously described, the valve sheet can be prepared from a POM or other thermoplastic or thermoset plastic or elastic material or metal. Again, preferred materials will be ones which have appropriate flexibility and elasticity characteristics, for operation as intended. Example of a usable materials would be thin spring steel or POM sheets.

In some instances, the valve sheet 36, 136, may be coated on a surface thereof, typically the surface directed toward the outer liner, with an elastic or elastomeric material or plastic (for example PTFE) to improve valve closing characteristics.

As indicated previously, a variety of materials and constructions can be used for the media 12, 112, including fibers media made from cellulose fibers, glass fibers and/or synthetic fibers. Wire or mesh backed media can be used.

For the end caps 13, 14 (or 113, 114) any of a variety of thermoplastic or thermoset plastic (or elastomeric) materials can be used. A usable material, for example, is a PA, i.e., a polyamide; or a polyacrylate; or a flexible polyolefin. As indicated previously, for systems that are not metal free, metal end caps can be used.

The end caps can be preformed and be potted to the media inner liner and, if desired, the liner/valve construction, with an appropriate potting material, for example plastisol, a hot melt, a polyurethane, or with an adhesive compatible with the environment of use. Various welded systems, or friction fit systems, can also be used. Alternatively, the end caps 13, 14 (or 113, 114) can be molded directly to various componentry.

The inner liner would typically comprise POM or another thermoplastic or thermoset plastic or elastic material, for a metal free application. A metal inner liner can be used.

## Claims

1. A filter cartridge (10, 110) comprising:
(a) an extension of filter media (12, 112) having an upstream surface and defining an internal volume (17, 117);
(b) an liner/valve construction (30, 130) positioned along the upstream surface of the filter media; the liner/valve construction including:
(i) a support (35, 135) defining an interior and having at least a first aperture extending therethrough; and,
(ii) a flexible valve sheet (36, 136) operably positioned within the interior of the support between the support and the extension of filter media, with an upstream surface of the valve sheet directed toward the support; the flexible valve sheet including at least one deformable valve member (40) oriented adjacent the first aperture, said valve member being deformable between:
(A) a first, open, orientation caused by a first opening fluid pressure against the upstream surface of the flexible valve sheet to allow contaminant flow through the liner/valve construction and to the filter media; and
(B) a second, closed, orientation to inhibit loss of contaminant from the filter cartridge; when fluid pressure against the upstream surface of the flexible valve sheet is below the first opening pressure.

2. A filter cartridge according to claim 1 wherein:
(a) the media is pleated and the liner/valve construction is positioned to circumscribe the filter media.

3. A filter cartridge according to any one of claims 1 and 2 wherein:
(a) the extension of filter media comprises a cylindrical extension of pleated media;
(b) the support is an outer perforated cylinder; and
(c) the flexible valve sheet comprises a sheet with each deformable valve member comprising a cut valve.

4. A filter cartridge according to any one of claims 1-3 wherein:
(a) the outer support includes at least 10 apertures therein; and,
(b) the flexible valve sheet includes at least 10 cut valves.

5. A filter cartridge according to any one of claims 1-4 wherein:
(a) each aperture in the outer support is operably oriented adjacent a cut valve in the flexible valve sheet.

6. A filter cartridge according to any of claims 1-5 including:
(a) first and second opposite end caps (13, 14; 113, 114);
(i) the extension of filter media being permanently secured in extension between the first and second end caps.

7. A filter cartridge according to claim 6 wherein:
(a) the liner/valve construction is permanently secured in extension between the first and second end caps (13, 14).

8. A filter cartridge according to claim 6 wherein:
(a) the liner/valve construction is removeably secured in extension between the first and second end caps (113, 114).

9. A filter cartridge according to claim 8 including:
(a) a first o-ring seal (138a) between the liner/valve construction and the first end cap (113); and,
(b) a second o-ring seal (139a) between the liner/valve construction and the second end cap (114).

10. A filter cartridge according to claim 4 wherein:
(a) the outer support includes an internal positioning rib (30, 60, 63, 201) having opposite sides; and,
(b) the flexible valve sheet has first and second side edges which are positioned to abut the opposite sides of the positioning rib.

11. A filter cartridge according to claim 10 wherein:
(a) the positioning rib is a continuous axial rib.

12. A filter cartridge according to claim 11 wherein:
(a) the opposite sides of the positioning rib are each undercut with an undercut angle of at least 1°.

13. A filter cartridge according to claim 10 wherein:
(a) each aperture in the outer support is circular and has a radius of at least 1 mm.

14. A filter cartridge according to claim 13 wherein:
(a) each cut valve is a u-shaped cut.

15. A filter cartridge according to claim 13 wherein:
(a) each cut valve is a circumferentially directed u-shaped cut.

16. A filter cartridge according to claim 13 wherein:
(a) each cut valve is a circumferentially directed curved u-shaped cut.

17. A filter cartridge according to claim 13 wherein:
(a) each cut valve is a circumferentially directed boxed u-shaped cut.

18. A filter cartridge according to claim 13 wherein:
(a) each cut valve associated with an aperture in the liner is a u-shaped cut having end terminii which define a line substantially tangential to the associated aperture in the liner.

19. A filter cartridge according to claim 13 wherein:
(a) each cut valve associated with an aperture in the liner is a u-shaped cut having end terminii which define a chord of the associated aperture.

20. A filter cartridge according to claim 13 wherein:
(a) each cut valve is a slit value.

21. A filter cartridge according to claim 3 wherein:
(a) each cut valve is a u-shaped cut.

22. A filter cartridge according to claim 21 wherein:
(a) each u-shaped cut has opposite sides that extend parallel to one another.

23. A filter cartridge according to claim 22 wherein:
(a) each cut valve associated with an aperture in the liner is a u-shaped cut having end terminii which define a line substantially tangential to the associated aperture in the liner.

24. A filter cartridge according to claim 21 wherein:
(a) each cut valve has a curved u-shape.

25. A filter cartridge according to claim 24 wherein:
(a) each aperture in the liner, associated with a cut valve, is circular.
(b) each cut valve associated with an aperture in the liner has a curved bottom formed to a circular radius at least 15% larger than a radius of an associated aperture.

26. A method of forming a liner/valve construction for a filter cartridge; said method including steps of:
(a) curling a flexible valve sheet (36;136) including at least one deformable valve member (40); said valve member being deformable between:
(i) first, open, orientation caused by a first opening fluid pressure against an upstream surface of the flexible valve sheet; and
(ii) a second, closed, orientation, when fluid pressure against the upstream surface of the flexible valve sheet is below a first opening pressure; and,
(b) positioning the flexible valve sheet inside of a porous tubular support.

27. A method according to claim 26 wherein said step of positioning further includes:
(a) positioning the flexible valve sheet in a tubular support having an axial positioning rib therein, with opposite end edges of the flexible valve sheet abutting the positioning rib.

28. A method of servicing a liquid filter arrangement including a step of:
(a) removing from the liquid filter arrangement, a filter cartridge according to any of claims 1-25 while the filter cartridge includes loaded contaminant positioned between the valve sheet and the filter media.

## Patentansprüche

1. Filterpatrone (10,110) umfassend:
(a) einen Abschnitt eines Filtermediums (12, 112), der eine zuströmseitige Oberfläche und ein inneres Volumen (17, 117) definiert;
(b) eine Rohr-/Ventil-Konstruktion (30,130), die entlang der zuströmseitigen Oberfläche des Filtermediums positioniert ist und Folgendes umfasst:
(i) eine Stütze (35, 135), die einen Innenraum definiert und zumindest eine erste Öffnung aufweist, die sich hierdurch erstreckt und
(ii) ein flexibles Ventilblech (36, 136), das innerhalb des Innenraums der Stütze so zwischen der Stütze und dem Filtermedium angeordnet ist, dass die zuströmseitige Oberfläche des Ventilblechs in Richtung der Stütze weist; das flexible Ventilblech zumindest ein deformierbares, an die erste Öffnung angrenzendes Ventil-Element (40) umfasst, welches deformierbar ist zwischen:
(A) einer ersten, offenen Stellung, die durch einen ersten öffnenden Fluiddruck gegen die zuströmseitige Oberfläche des flexiblen Ventilblechs verursacht wird und einen Verunreinigungsstrom durch die Rohr-/Ventil-Konstruktion zu dem Filtermedium gestattet und
(B) einer zweiten, geschlossenen Stellung, um den Verlust von Verunreinigungen aus der Filterpatrone zu verhindern, wenn der Fluiddruck gegen die zuströmseitige Oberfläche des flexiblen Ventilblechs niedriger ist als der erste Öffnungsdruck.

2. Filterpatrone gemäß Anspruch 1, bei der:
(a) das Medium gefaltet und die Rohr-/Ventil-Konstruktion so angeordnet ist, dass sie das Filtermedium umschließt.

3. Filterpatrone gemäß einem der Ansprüche 1 und 2, bei der:
(a) der Filtermedium-Abschnitt ein zylindrischer Abschnitt des gefalteten Mediums ist;
(b) die Stütze ein äußerer perforierter Zylinder ist und
(c) das flexible Ventilblech ein Blech ist, bei dem jedes deformierbare Ventil-Element als Absperrventil ausgebildet ist.

4. Filterpatrone gemäß einem der Ansprüche 1 bis 3, bei der:
(a) die äußere Stütze zumindest 10 Öffnungen aufweist und
(b) das flexible Ventilblech zumindest 10 Absperrventile umfasst.

5. Filterpatrone gemäß einem der Ansprüche 1 bis 4, bei der:
(a) jede Öffnung in der äußeren Stütze so angeordnet ist, dass sie an das Absperrventil in dem flexiblen Ventilblech angrenzt.

6. Filterpatrone gemäß einem der Ansprüche 1 bis 5 umfassend:
(a) eine erste und eine zweite sich gegenüberliegende Endkappe (13, 14, 113,114), zwischen denen
(i) der Filtermedium-Abschnitt dauerhaft gesichert ist.

7. Filterpatrone gemäß Anspruch 6, bei der:
(a) die Rohr-/Ventil-Konstruktion in Verlängerung zwischen der ersten und zweiten Endkappe (13, 14) dauerhaft gesichert ist.

8. Filterpatrone gemäß Anspruch 6, bei der:
(a) die Rohr-/Ventil-Konstruktion in Verlängerung zwischen der ersten und zweiten Endkappe (113, 114) demontierbar gesichert ist.

9. Filterpatrone gemäß Anspruch 8 umfassend:
(a) eine erste O-Ring-Dichtung (138a) zwischen der Rohr-Nentil-Konstruktion und der ersten Endkappe (113) und
(b) eine zweite O-Ring-Dichtung (139a) zwischen der Rohr-/Ventil-Konstruktion und der zweiten Endkappe (114).

10. Filterpatrone gemäß Anspruch 4, bei der:
(a) die äußere Stütze eine innere Positionierungs-Rippe (30, 60, 63, 201) mit gegenüberliegenden Seiten umfasst und
(b) das flexible Ventilblech eine erste und eine zweite Seitenkante aufweist, welche so positioniert sind, dass sie an den gegenüberliegenden Seiten der Positionierungs-Rippe anliegen.

11. Filterpatrone gemäß Anspruch 10, bei der:
(a) die Positionierungs-Rippe eine durchgängige Axialrippe ist.

12. Filterpatrone gemäß Anspruch 11, bei der:
(a) die gegenüberliegenden Seiten der Positionierungs-Rippe jeweils einen Hinterschnitt mit einem Hinterschnittwinkel von mindestens 1° aufweisen.

13. Filterpatrone gemäß Anspruch 10, bei der:
(a) jede Öffnung in der äußeren Stütze kreisförmig ist und einen Radius von mindestens 1 mm hat.

14. Filterpatrone gemäß Anspruch 13, bei der:
(a) jedes Absperrventil aus einem U-förmigen Schnitt besteht.

15. Filterpatrone gemäß Anspruch 13, bei der:
(a) jedes Absperrventil einen ringsum gerichteten U-förmigen Schnitt aufweist.

16. Filterpatrone gemäß Anspruch 13, bei der
(a) jedes Absperrventil einen ringsum gerichteten gebogenen U-förmigen Schnitt aufweist.

17. Filterpatrone gemäß Anspruch 13, bei der
(a) jedes Absperrventil einen ringsum gerichteten, eingefassten U-förmigen Schnitt aufweist.

18. Filterpatrone gemäß Anspruch 13, bei der:
(a) jedes Absperrventil, das einer Öffnung in dem Rohr zugeordnet ist, einen U-förmigen Schnitt aufweist, dessen Endpunkte eine Linie definieren, die im Wesentlichen tangential zu der zugeordneten Öffnung in dem Rohr verläuft.

19. Filterpatrone gemäß Anspruch 13, bei der:
(a) jedes Absperrventil, das einer Öffnung in dem Rohr zugeordnet ist, einen U-förmigen Schnitt aufweist, dessen Endpunkte eine Sehne der zugeordneten Öffnung definieren.

20. Filterpatrone gemäß Anspruch 13, bei der:
(a) jedes Absperrventil als Schlitz ausgestaltet ist.

21. Filterpatrone gemäß Anspruch 3, bei der:
(a) jedes Absperrventil einen U-förmigen Schnitt aufweist.

22. Filterpatrone gemäß Anspruch 21, bei der:
(a) jeder U-förmige Schnitt gegenüberliegende Seiten hat, die parallel zueinander verlaufen.

23. Filterpatrone gemäß Anspruch 22, bei der:
(a) jedes einer Öffnung in dem Rohr zugeordnete Absperrventil einen U-förmigen Schnitt aufweist, dessen Endpunkte eine Linie definieren, die im Wesentlichen tangential zu der zugeordneten Öffnung in dem Rohr verläuft.

24. Filterpatrone gemäß Anspruch 21, bei der:
(a) jedes Absperrventil einen gebogenen U-förmigen Schnitt aufweist.

25. Filterpatrone gemäß Anspruch 24, bei der:
(a) jede einem Absperrventil zugeordnete Öffnung in dem Rohr kreisförmig ist,
(b) jedes einer Öffnung in dem Rohr zugeordnete Absperrventil eine gebogene Sohle aufweist, die zu einem kreisförmigen Radius geformt ist, der zumindest 15% größer ist als der Radius der zugeordneten Öffnung.

26. Verfahren zur Formung einer Rohr-/Ventil-Konstruktion für eine Filterpatrone, welches folgende Schritte umfasst:
(a) Einrollen eines mindestens ein deformierbares Ventil-Element (40) aufweisenden flexiblen Ventilblechs (36, 136), dessen Ventil-Element deformierbar ist zwischen:
(i) einer ersten, offenen Stellung, die durch einen ersten öffnenden Fluiddruck verursacht wird, der gegen die zuströmseitige Oberfläche des flexiblen Ventilblechs gerichtet ist, und
(ii) einer zweiten, geschlossenen Stellung, bei der der auf die zuströmseitige Oberfläche des flexiblen Ventilblechs wirkende Fluiddruck niedriger ist als der erste Öffnungsdruck und
(b) Positionierung des flexiblen Ventilblechs in einer durchlässigen, rohrförmigen Stütze.

27. Verfahren gemäß Anspruch 26, bei dem der Schritt der Positionierung ferner umfasst
(a) das Positionieren des flexiblen Ventilblechs in einer rohrförmigen Stütze, die eine axiale Positionierungs-Rippe darin enthält, an die die gegenüberliegenden Endkanten des flexibeln Ventilblechs angrenzen.

28. Verfahren zum Warten eines Flüssigkeitsfilters umfassend den Schritt:
(a) Entfernen einer Filterpatrone gemäß einem der Ansprüche 1 bis 25 aus dem Flüssigkeitsfilter, die mit Verunreinigungen zwischen dem Ventilblech und dem Filtermedium beladen ist.

## Revendications

1. Cartouche de filtration (10, 110) comprenant :
(a) une extension d'un milieu filtrant (12, 112) ayant une surface en amont et définissant un volume interne (17, 117) ;
(b) une construction de revêtement / soupape (30, 130) positionnée le long de la surface amont du milieu filtrant ; la construction de revêtement / soupape comprenant :
(i) un support (35, 135) définissant à l'intérieur et ayant au moins une première ouverture s'étendant à travers celui-ci ; et
(ii) une soupape à membrane flexible (36, 136) positionnée de manière opérationnelle à l'intérieur de l'intérieur du support entre le support et l'extension du milieu filtrant, avec une surface amont de la soupape à membrane dirigée vers le support ; la soupape à membrane comprenant au moins un élément de soupape déformable (40) orienté de manière adjacente à la première ouverture, ledit élément de soupape étant déformable entre :
(A) une première orientation ouverte provoquée par une première pression de fluide d'ouverture contre la surface amont de la soupape à membrane flexible pour permettre l'écoulement de contaminant à travers la construction de revêtement / soupape et vers le milieu filtrant ; et
(B) une seconde orientation fermée pour empêcher la perte du contaminant de la cartouche de filtration ; lorsque la pression de fluide contre la surface amont de la soupape à membrane flexible est au-dessous de la première pression d'ouverture.

2. Cartouche de filtration selon la revendication 1, dans laquelle :
(a) le milieu est plissé et la construction de revêtement / soupape est positionnée pour entourer le milieu filtrant.

3. Cartouche de filtration selon l'une quelconque des revendications 1 et 2, dans laquelle :
(a) l'extension du milieu filtrant comprend une extension cylindrique de milieu plissé ;
(b) le support est un cylindre perforé externe ; et
(c) la soupape à membrane flexible comprend une membrane avec chaque élément de membrane déformable comprenant une soupape découpée.

4. Cartouche de filtration comprenant l'une quelconque des revendications 1 à 3, dans laquelle :
(a) le support externe comprend au moins 10 ouvertures à l'intérieur de celui-ci ; et
(b) la soupape à membrane flexible comprend au moins 10 soupapes découpées.

5. Cartouche de filtration selon l'une quelconque des revendications 1 à 4, dans laquelle :
(a) chaque ouverture dans le support externe est orientée de manière opérationnelle adjacente à une soupape découpée dans la soupape à membrane flexible.

6. Cartouche de filtration selon l'une quelconque des revendications 1 à 5, comprenant :
(a) des premier et second capuchons d'extrémité opposés (13, 14 ; 113, 114) ;
(i) l'extension du milieu filtrant étant fixée de manière permanente dans l'extension entre les premier et second capuchons d'extrémité.

7. Cartouche de filtration selon la revendication 6, dans laquelle :
(a) la construction de revêtement / soupape est fixée de manière permanente en extension entre les premier et second capuchons d'extrémité (13, 14).

8. Cartouche de filtration selon la revendication 6, dans laquelle :
(a) la construction de revêtement / soupape est fixée de manière amovible en extension entre les premier et second capuchons d'extrémité (113, 114).

9. Cartouche de filtration selon la revendication 8, comprenant :
(a) un premier joint torique (138a) entre la construction de revêtement / soupape et le premier capuchon d'extrémité (113) ; et
(b) un second joint torique (139a) entre la construction de revêtement / soupape et le second capuchon d'extrémité (114).

10. Cartouche de filtration selon la revendication 4, dans laquelle :
(a) le support externe comprend une nervure de positionnement interne (30, 60, 63, 201) ayant des côtés opposés ; et
(b) la soupape à membrane flexible a des premier et second bords latéraux qui sont positionnés pour venir en butée contre les côtés opposés de la nervure de positionnement.

11. Cartouche de filtration selon la revendication 10, dans laquelle :
(a) la nervure de positionnement est une nervure axiale continue.

12. Cartouche de filtration selon la revendication 11, dans laquelle :
(a) les côtés opposés de la nervure de positionnement sont chacun creusés avec un angle de dépouille d'au moins 1°.

13. Cartouche de filtration selon la revendication 10, dans laquelle :
(a) chaque ouverture dans le support externe est circulaire et a un rayon d'au moins 1 mm.

14. Cartouche de filtration selon la revendication 13, dans laquelle :
(a) chaque soupape découpée est une découpe en forme de u.

15. Cartouche de filtration selon la revendication 13, dans laquelle :
(a) chaque soupape découpée est une découpe en forme de u dirigée de manière circonférentielle.

16. Cartouche de filtration selon la revendication 13, dans laquelle :
(a) chaque soupape découpée est une découpe en forme de u incurvée dirigée de manière circonférentielle.

17. Cartouche de filtration selon la revendication 13, dans laquelle :
(a) chaque soupape découpée est une découpe en forme de u carrée dirigée de manière circonférentielle.

18. Cartouche de filtration selon la revendication 13, dans laquelle :
(a) chaque soupape découpée associée avec une ouverture dans le revêtement est une découpe en forme de u ayant des terminaisons d'extrémité qui définissent une ligne sensiblement tangentielle à l'ouverture associée dans le revêtement.

19. Cartouche de filtration selon la revendication 13, dans laquelle :
(a) chaque soupape découpée associée avec une ouverture dans le revêtement est une découpe en forme de u ayant des terminaisons d'extrémité qui définissent une corde de l'ouverture associée.

20. Cartouche de filtration selon la revendication 13, dans laquelle :
(a) chaque soupape découpée est une valeur de fente.

21. Cartouche de filtration selon la revendication 3, dans laquelle :
(a) chaque soupape découpée est une découpe en forme de u.

22. Cartouche de filtration selon la revendication 21, dans laquelle :
(a) chaque découpe en forme de u a des côtés opposés qui s'étendent parallèlement l'un par rapport à l'autre.

23. Cartouche de filtration selon la revendication 22, dans laquelle :
(a) chaque soupape découpée associée avec une ouverture dans le revêtement est une découpe en forme de u ayant des terminaisons d'extrémité qui définissent une ligne sensiblement tangentielle à l'ouverture associée dans le revêtement.

24. Cartouche de filtration selon la revendication 21, dans laquelle :
(a) chaque soupape découpée a une forme de u incurvée.

25. Cartouche de filtration selon la revendication 24, dans laquelle :
(a) chaque ouverture dans le revêtement, associée avec une soupape découpée, est circulaire.
(b) chaque soupape découpée associée avec une ouverture dans le revêtement a un fond incurvé formé sur un rayon circulaire d'au moins 15 % plus large qu'un rayon d'une ouverture associée.

26. Procédé permettant de former une construction de revêtement / soupape pour une cartouche de filtration ; ledit procédé comprenant les étapes consistant à :
(a) enrouler une soupape à membrane flexible (36 ; 136) comprenant au moins un élément de soupape déformable (40) ; ledit élément de soupape étant déformable entre :
(i) une première orientation ouverte provoquée par une première pression de fluide d'ouverture contre une surface amont de la soupape à membrane flexible ; et
(ii) une seconde orientation fermée, lorsque la pression de fluide contre la surface amont de la soupape à membrane flexible est au-dessous d'une première pression d'ouverture ; et
(b) positionner la membrane à soupape flexible à l'intérieur d'un support tubulaire poreux.

27. Procédé selon la revendication 26, dans lequel ladite étape de positionnement supplémentaire comprend :
(a) positionner la soupape à membrane flexible dans un support tubulaire ayant une nervure de positionnement axial à l'intérieur de celui-ci, avec des bords d'extrémité opposés de la soupape à membrane flexible venant en butée contre la nervure de positionnement.

28. Procédé pour mettre en service un agencement de filtre de liquide comprenant l'étape consistant à :
(a) retirer de l'agencement de filtre de liquide, une cartouche de filtration selon l'une quelconque des revendications 1 à 25, alors que la cartouche de filtration comprend des contaminants chargés positionnés entre la soupape à membrane et le milieu filtrant.
